Europäisches Patentamt

European Patent Office

Office européen des brevets

(18)

(11) Publication number: **0 168 979**
**B1**

(12) **EUROPEAN PATENT SPECIFICATION**

(45) Date of publication of patent specification: **02.08.89**

(51) Int. Cl.⁴: **C 10 G 11/18**

(21) Application number: **85304367.7**

(22) Date of filing: **19.06.85**

(54) Method of adding ZSM-5 containing catalyst to fluid bed catalytic cracking units.

(30) Priority: **11.07.84 US 629922**

(43) Date of publication of application:
**22.01.86 Bulletin 86/04**

(45) Publication of the grant of the patent:
**02.08.89 Bulletin 89/31**

(84) Designated Contracting States:
**AT BE DE FR GB IT NL SE**

(56) References cited:
**EP-A-0 044 631**
**US-A-3 758 403**
**US-A-4 309 279**

(73) Proprietor: **MOBIL OIL CORPORATION**
**150 East 42nd Street**
**New York New York 10017 (US)**

(72) Inventor: **Chou, Tai-Sheng**
**233 Champion Way**
**Sewell New Jersey 08080 (US)**
Inventor: **Krambeck, Frederick John**
**108 Green Vale Road**
**Cherry Hill New Jersey 08034 (US)**
Inventor: **Schipper, Paul Herbert**
**2506 Berwyn Road**
**Wilmington Delaware 19810 (US)**

(74) Representative: **Cooper, John Anthony et al**
**Mobil Court 3 Clements Inn**
**London WC2A 2EB (GB)**

Courier Press, Leamington Spa, England.

## Description

The invention is an improvement in the fluid bed catalytic cracking process.

Catalytic cracking of hydrocarbons with zeolite-containing catalyst is a well-known process.

In fluidized catalytic cracking, the hydrocarbons contact fluidized catalyst and are cracked to lighter products.

The catalyst is deactivated by coke deposition, necessitating regeneration of coked catalyst in a regenerator.

Zeolitic materials, both natural and synthetic, have been demonstrated in the past to have catalytic properties for various types of hydrocarbon conversion. Certain zeolites are ordered, porous crystalline aluminosilicates having a definite crystalline structure within which there are a large number of smaller cavities which may be interconnected by still smaller channels. These materials are known as molecular sieves.

Many methods have been developed for preparing a variety of synthetic aluminosilicates. These aluminosilicates have come to be designated by letter or other symbol, e.g., Zeolite A (U.S. Patent No. 2,882,243), Zeolite X (U.S. 2,882,244), Zeolite Y (U.S. 3,130,007), and ZSM-5 (U.S. 3,702,886), merely to name a few.

ZSM-5 is a particularly interesting zeolite, and much work with ZSM-5 has been reported in the patent literature on adding an intermediate pore size zeolite, e.g., ZSM-5, to the conventional cracking catalyst. Use of large pore and small pore crystalline materials in catalytic cracking is known. Quite a lot of work has been done adding ZSM-5, and related intermediate pore size zeolites, to conventional large pore cracking catalyst.

In U.S. Patent 3,758,403, from 2-1/2 to 10 percent ZSM-5 catalyst was added to a conventional cracking catalyst containing 10 percent REY, the remainder being Georgia clay. Examples were given showing use of 1.5, 2.5, 5 and 10 weight percent ZSM-5 added to the conventional cracking catalyst.

The ZSM-5 catalyst resulted in increased production of dry gas, some loss of gasoline yield, and an increase in octane number.

ZSM-5 catalyst, especially virgin catalyst, has exceedingly high activity. Researchers have attempted to take advantage of the super activity of fresh ZSM-5 catalysts by adding only small amounts of it to FCC catalyst. Such work is shown in U.S. Patent 4,309,280. This patent taught adding very small amounts of powdered neat ZSM-5 catalyst, characterized by a particle size less than 5 microns.

This patent taught that adding as little as 0.25 weight percent ZSM-5 powder to the circulating catalyst inventory in an FCC unit would increase dry gas production by 50 percent.

Because of the high initial activity of the ZSM-5 catalyst, and increased dry gas production due to the addition of large amounts of ZSM-5, refiners are reluctant to start up a unit with, or add quickly to a unit, a relatively large amount of virgin ZSM-5 catalyst.

If only very small amounts of ZSM-5 catalyst are added, there will be no problem with excessive dry gas production, but the effect of adding ZSM-5 may not be apparent for days or weeks, by which time normal variations in feed, or unit operation, may obscure the octane enhancing effect of ZSM-5 addition.

We have discovered a good commercial method of adding ZSM-5 catalyst to an FCC unit. Basically the approach taken is to add sufficient ZSM-5 so that a preset octane gain is achieved, typically around 0.5 to 2.0 research octane.

Accordingly the present invention provides a method of adding ZSM-5 additive catalyst to the catalyst inventory of a fluidized catalytic cracking unit comprising determining a target octane number boost desired, the octane boost being at least equivalent to an increase of 0.5 research octane number, in the gasoline fraction of the FCC product stream; making a first addition of ZSM-5 additive within a period of no more than about 24 hours to produce the desired target octane boost; adding, within every 24—48-hour period thereafter, additional ZSM-5 catalyst sufficient to maintain the target octane boost at the desired level, and wherein the total amount of ZSM-5 catalyst additive added in any 48-hour period is less than the ZSM-5 additive added during the first 24-hour addition period.

In another embodiment, the present invention provides a method of adding ZSM-5 catalyst to an FCC unit containing an inventory of equilibrium catalyst comprising:

a) adding ZSM-5 catalyst to the equilibrium catalyst inventory, wherein the wt% ZSM-5, on a pure ZSM-5 basis, added to the catalyst inventory is equal to 1 to 6 wt% of the equilibrium catalyst and sufficient to increase the research octane number of the FCC gasoline product from 0.5 to 3.0 octane numbers, and wherein the ZSM-5 enhancement effect is attained within a 24-hour period; and

b) adding thereafter, on a daily basis for at least a 1-week period, additional ZSM-5 catalyst in gradually reducing increments catalyst sufficient to maintain the desired increase in product octane number, whereby an FCC gasoline fraction with increased product octane is produced as a product of the process.

The ZSM-5 may be added on a daily basis for a period of at least 30 days.

In a more limited embodiment, the present invention provides a method of incorporating ZSM-5 catalyst into an FCC unit containing equilibrium FCC catalyst comprising rare earth Y zeolite in a matrix comprising

a) adding within a 24—48 hour period ZSM-5 zeolite in the form of 25 wt% zeolite and 75 wt% binder, in an amount equivalent to 2—5 wt%, based on the weight of ZSM-5 zeolite, and binder, and on the total weight of equilibrium catalyst circulating within the FCC unit, and sufficient to increase the octane number of the FCC gasoline product by about 1.0 to 1.5 research octane numbers; and

b) adding, on a daily basis thereafter, for at least one week a diminishing amount of ZSM-5 catalyst to maintain the increase in octane number of the FCC gasoline product. The make up rate of ZSM-5 is substantially equal to:

| Day | Wt % ZSM-5 |
|---|---|
| 1 | 0.75 to 0.9 |
| 2 | 0.192 to 0.24 |
| 3 | 0.192 to 0.24 |
| 4 | 0.14 to 0.175 |
| 5 | 0.14 to 0.175 |
| 6 | 0.14 to 0.175 |
| 7—12 | 0.12 to 0.15 |
| 13—18 | 0.108 to 0.13 |
| 19—30 | 0.092 to 0.115 |
| 31+ | 0.08 to 0.095 |

The amount of ZSM-5 zeolite in the form of 25 wt% zeolite and 75 wt% binder is equivalent to 2—5 wt% of the equilibrium catalyst. In the present invention the increase in research octane number is at least 0.5, preferably 0.5 to 3.0 and most preferably 1.0 to 1.5.

ZSM-5

ZSM-5 is described in U.S. Patent No. 3,702,886 and Re 28,398.

Quite a lot of work has been done on making material with a ZSM-5 crystal structure, but with different materials, ranging from all silica to materials containing silica and some other tetravalent metal such as boron, iron, gallium, etc.

As used herein, the term ZSM-5 refers to a material which has substantially the same crystal structure as shown in U.S. Patent 3,702,886. Substitution of different cations, or changing the silica/alumina, or silica/boron ratio, may result in minor modifications of the X-ray diffraction patterns of the crystalline material so produced, but it is still ZSM-5, and contemplated for use herein.

Fluid bed catalytic cracking

This is a very common process, and a detailed description thereof is not believed necessary. Somewhat oversimplified, catalyst contacts oil in a fluidized state, cracking the oil and coking the catalyst. Coke is burned from the catalyst in a fluidized regeneration zone to regenerate the catalyst, with regenerated catalyst being recycled to react further with hydrocarbon feed.

More details of the fluidized catalytic cracking process are disclosed in U.S. Patents 4,309,279 and 4,309,280.

ZSM-5 addition

In general terms, the refiner will select a target octane number boost desired, and continue to add sufficient ZSM-5 catalyst to attain the desired octane boost.

As a practical matter, it will be difficult to observe gains in octane of less than about one half octane number, setting an effective lower limit on octane boost that may be achieved.

Usually 1.0 octane No. gain is the preferred target, it is enough of a gain that it can be readily observed in an operating refinery, while minimizing the change in operation of the unit.

An octane boost of about 3.0 ON is probably the upper limit on octane boost which can be achieved by the method of the present invention. Any octane boost of this magnitude, or higher, may result in significantly increased production of dry gas, overloading the wet gas compressor and downstream processing facilities.

A number of variables are involved in determining the program of ZSM-5 addition.

1. Equilibrium catalyst

If the equilibrium catalyst has been severely deactivated, the addition of ZSM-5 will have a bigger effect than if a more active equilibrium catalyst was present in the unit.

3

Most, but not all, FCC units operate with a catalyst comprising a large pore zeolite, typically a rare earth exchanged Y, or ultrastable Y zeolite in an amorphous matrix. Typically the FAI activity of this catalyst will be 40 to 70.

The fluid activity index (FAI) is a method used to measure the relative cracking activity of fluidized catalyst. The test is carried out in a fixed fluidized bed containing 180 g of the catalyst using a standardized feed, Light East Texas gas oil, with 3% water (based on feed) added. The standard test conditions are atmospheric pressure, 850°F/454°C, a weight hourly spaced velocity of 6, a catalyst-to-oil ratio of 2, and a time on stream of 5 minutes. The product is a gasoline having a 90% boiling point of 180°C. Conversion is defined as 100% minus LV% cycle oil product.

2. Operating conditions

The severity of the operation may have an effect upon target octane. Addition of a given amount of ZSM-5 catalyst to a unit operating at relatively low severity conditions may produce a different effect than addition of the same amount of ZSM-5 catalyst to a unit operating under very severe conditions.

3. Feedstock

Any conventional FCC feed may continue to be used as feed to the FCC unit during the practice of the present invention. The octane No. response of different feeds to ZSM-5 catalyst may be different.

ZSM-5 activity

The acid activity, or cracking activity, of the ZSM-5 catalyst will vary greatly with silica/alumina ratio. In general, the more aluminum that is present, the more active acid sites on the catalyst. Conventional ZSM-5 catalyst loses activity fairly rapidly in an FCC unit, probably due to a slight steaming effect that occurs in the FCC regenerator.

Various modifiers, e.g., Ag, may be added to the ZSM-5 catalyst to improve its steam stability. Such modifiers form no part of the present invention. If modified ZSM-5 catalyst are used, it may be necessary to adjust somewhat the rate of addition of the modified ZSM-5 catalyst.

ZSM-5 activity decay

The most important variable in determining a ZSM-5 addition rate is the rate of activity decay of the ZSM-5 catalyst added to the FCC unit.

If the catalyst activity did not decline, but remained undiminished, there would be no need to practice the present invention. Addition of a given amount of ZSM-5 catalyst on the first day of operation would, without further ZSM-5 addition, achieve the desired boost in product octane number. Such operation, desirable as it may be, has never been attained so after about one day of operation more fresh ZSM-5 catalyst must be added to compensate for the loss in activity of the ZSM-5 catalyst already in the FCC unit.

A typical ZSM-5 addition rate necessary to achieve a constant increase in octane will be given. The precise addition rates are dependent upon all of the variables discussed above. The basic operating conditions for this excercise are listed below.

    1.  Equilibrium catalyst
        13% REY in a silica/alumina matrix
        average particle size 40 to 120 microns,
        58 FAI activity.

2. ZSM-5 additive—the additive consisted of 25 wt% HZSM-5 (which had not been subjected to steaming or calcining) in a silica/alumina matrix (75 wt%). The FAI activity of the additive composite (which is a mixture of ZSM-5 and silica/alumina) was aroud 68.

3. FCC operating conditions, including regeneration conditions, are shown in Table 1.

4. Feedstock properties are also shown in Table 1.

4

## TABLE 1
### Operating conditions

| | |
|---|---|
| Fresh feed, TBD/m$^3$/hr | 15.3/101.4 |
| C/O, Catalyst/oil-weight | 6.6 |
| Riser top temp, °F/°C | 967/519 |
| Maximum regenerator temp., °F/°C | 1310/710 |
| Oil/preheat temp., °F/°C | 735/391 |
| Catalyst activity, FAI | 58 |
| Catalyst inventory, tons | 60 |

### Charge stock characterization

| | |
|---|---|
| Density, g/cm$^3$ | 0.927 |
| API | 21.8 |
| S, wt% | 0.5 |
| Molecular weight | 375 |
| Basic nitrogen, ppm | 570 |
| $C_A$, wt% | 17.3 |
| Conradson carbon residue, wt% | 0.06 |

Based on these assumptions, the wt% additive necessary to achieve a 1.5 octane No. boost is presented hereafter in Table 2. This is a projection based upon our pilot plant results, and mathematical models, it does not represent an actual commercial scale test.

## TABLE 2
### Example of ZSM-5 catalyst makeup+1.5 research octane increase

| From (day) | To (day) | Additive makeup rate as % of inventory per day | ZSM-5 Makeup rate as % of inventory per day |
|---|---|---|---|
| 0 | 1 | 3.6 to 3.7 | 0.75 to 0.9 |
| 1 | 3 | 0.96 | 0.192 to 0.24 |
| 3 | 6 | 0.70 | 0.14 to 0.175 |
| 6 | 12 | 0.60 | 0.12 to 0.15 |
| 12 | 18 | 0.52 | 0.108 to 0.13 |
| 18 | 30 | 0.46 | 0.092 to 0.115 |
| 30+ | | 0.38 | 0.08 to 0.095 |

The reason that additive amounts are reported in two ways is that the additive comprises 20 wt% ZSM-5, with the remaining portion being a silica/alumina binder. The silica/alumina is not inert, it has some cracking activity, so for completeness both the ZSM-5 portion added, and the total additve (consisting of ZSM-5 plus its binder) is reported above.

The addition rate does take into account the small amounts of ZSM-5 present in the circulating catalyst removed as additional catalyst is added. However, it does assume that both catalysts attrit from the unit at the same rate.

5

The equilibrium ZSM-5 additive catalyst has a much lower FAI activity than does the equilibrium catalyst, so eventually more fresh REY cracking catalyst must be added to maintain overall catalyst activity in the unit at a predetermined level.

This dilution effect, of the REY zeolite conventional cracking catalyst with the additive, can be minimized either by using a more concentrated ZSM-5 additive catalyst, or incorporating some conventional REY zeolite into the additive catalyst so that the overall FAI activity of a unit is not changed. The additive dilution effect could be largely avoided by using as an additive catalyst a ZSM-5+matrix which contained, on an overall weight percent basis, about 12% REY.

## Claims

1. A method of adding ZSM-5 additive catalyst to the catalyst inventory of a fluidized catalytic cracking unit comprising:

a) determining a target octane number boost desired, the octane boost being at least 0.5 research octane number, in the gasoline fraction of the FCC product stream;

b) making a first addition of ZSM-5 additive within a period of no more than about 24 hours sufficient to produce the desired target octane boost; and

c) adding, within every 24—48 hour period thereafter, additional ZSM-5 catalyst sufficient to maintain the target octane boost at the desired level, and wherein the total amount of ZSM-5 catalyst additive added in any 24—48-hour period is less than the ZSM-5 additive added during the first 24-hour addition period.

2. Method of Claim 1 wherein the octane boost is 0.5 to 3.0 research octane number.

3. Method of Claim 1 wherein the octane boost is 1.0—1.5 octane number.

4. A method of adding ZSM-5 catalyst to an FCC unit containing an inventory of equilibrium catalyst comprising:

a) adding ZSM-5 catalyst to the equilibrium catalyst inventory, wherein the wt% ZSM-5, on a pure ZSM-5 basis, added to the catalyst inventory is equal to 1 to 6 wt% of the equilibrium catalyst and sufficient to increase the research octane number of the FCC gasoline product from 0.5 to 3.0 octane numbers, and wherein the ZSM-5 enhancement effect is attained within a 24-four hour period; and

b) adding thereafter, on a daily basis for at least a 1-week period, additional ZSM-5 catalyst in gradually reducing increments catalyst sufficient to maintain the desired increase in product octane number, whereby an FCC gasoline fraction with increased product octane is produced as a product of the process.

5. Method of Claim 4 wherein the octane boost is 1.0—1.5.

6. Method of Claim 4 wherein ZSM-5 is added on a daily basis for at least 30 days.

7. A method of incorporating ZSM-5 catalyst into an FCC unit containing equilibrium FCC catalyst comprising rare earth Y zeolite in a matrix comprising

a) adding within a 24—48 hour period ZSM-5 zeolite in the form of 25 wt% zeolite and 75 wt% binder, in an amount equivalent to 2—5 wt%, based on the weight of ZSM-5 zeolite, and binder, and on the total weight of equilibrium catalyst circulating within the FCC unit, and sufficient to increase the octane number of the FCC gasoline product by about 1.0 to 1.5 research octane numbers; and

b) adding, on a daily basis thereafter, for at least one week a diminishing amount of ZSM-5 catalyst to maintain the increase in octane number of the FCC gasoline product.

8. Method of Claim 7 wherein the increase in octane is 1.5, and the makeup rate of ZSM-5, per day, is substantially equal to:

| Day | Wt % ZSM-5 |
| --- | --- |
| 1 | 0.75 to 0.9 |
| 2 | 0.192 to 0.24 |
| 3 | 0.192 to 0.24 |
| 4 | 0.14 to 0.175 |
| 5 | 0.14 to 0.175 |
| 6 | 0.14 to 0.175 |
| 7—12 | 0.12 to 0.15 |
| 13—18 | 0.108 to 0.13 |
| 19—30 | 0.092 to 0.115 |
| 31+ | 0.08 to 0.095 |

# EP 0 168 979 B1

9. The method of Claim 7 wherein the amount of ZSM-5 zeolite in the form of 25 wt% zeolite and 75 wt% binder is equivalent to 2—5 wt% of the equilibrium catalyst.

10. The method of Claim 8 wherein the amount of zeolite ZSM-5 in the form of 25 wt% zeolite and 75 wt% binder is equivalent to 2—5 wt% of the equilibrium catalyst.

**Patentansprüche**

1. Verfahren zur Zugabe eines Zusatzkatalysators ZSM-5 zum Katalysatorbestand einer katalytischen Wirbelschicht-Crackanlage, welches umfaßt:

a) Bestimmung der gewünschten Erhöhung der Soll-Oktanzahl in der Benzinfraktion des Produktstromes des katalytischen Wirbelschichtcrackens, wobei diese Oktanerhöhung einer Researchoktanzahl von mindestens 0,5 darstellt;

b) Durchführung einer ersten Zugabe des ZSM-5-Zusatzes innerhalb eines Zeitraumes von nicht mehr als etwa 24 h, die ausreichend ist, um die gewünschte Erhöhung der Soll-Oktanzahl zu bewirken; und

c) anschließende Zugabe von zusätzlichem Katalysator ZSM-5 innerhalb jeweils eines Zeitraumes von 24—48 h, der ausreichend ist, um die Erhöhung der Soll-Oktanzahl bei diesem gewünschten Wert zu halten, wobei die Gesamtmenge des Katalysatorzusatzes ZSM-5, die in jedem Zeitraum vom 24—48 h zugegeben wurde, geringer als die des ZSM-5-Zusatzes ist, der während des ersten Zugabezeitraumes von 24 h zugegeben wurde.

2. Verfahren nach Anspruch 1, worin die Oktanerhöhung 0,5 bis 3,0 Researchoktanzahl beträgt.

3. Verfahren nach Anspruch 1, worin die Oktanerhöhung, 1,0 bis 1,5 Oktanzahl beträgt.

4. Verfahren der Zugabe von Katalysator ZSM-5 zu einer katalytischen Wirbelschicht-Crackanlage, die einen Gleichgewichtskatalysatorbestand enthält, welches umfaßt:

a) Zugabe des Katalysators ZSM-5 zum Gleichgewichtskatalysatorbestand, wobei die zum Katalysatorbestand zugegebenen Gew.-% an ZSM-5, auf reiner ZSM-5-Basis, gleich 1 bis 6 Gew.-% des Gleichgewichtskatalysators sind und ausreichend sind, um die Researchoktanzahl des Benzinproduktes vom katalytischen Wirbelschichtcracken von 0,5 bis 3,0 Oktanzahlen zu erhöhen, wobei die erhöhende Wirkung von ZSM-5 innerhalb eines Zeitraumes von 24-vier Stunden erzielt wird; und

b) anschließende Zugabe von zusätzliche Katalysator ZSM-5 auf Tagesbasis während eines Zeitraumes von mindestens einer Woche bei schrittweiser Verringerung des Katalysatorzuwachses, der ausreichend ist, um die gewünschte Erhöhung der Oktanzahl des Produktes aufrechtzuerhalten, wobei als Produkt dieses Verfahrens eine Benzinfraktion des katalytischen Wirbelschichtcrackens mit erhöhter Oktanzahl des Produkts erzeugt wird.

5. Verfahren nach Anspruch 4, worin die Oktanerhöhung 1,0—1,5 beträgt.

6. Verfahren nach Anspruch 4, worin ZSM-5 auf Tagesbasis mindestens 30 Tage lang zugegeben wird.

7. Verfahren zur Einarbeitung des Katalysators ZSM-5 in eine katalytische Wirbelschicht-Crackanlage, die einen Gleichgewichtskatalysator für das katalytische Wirbelschichtcracken enthält, der einen mit Selten Erden ausgetauschten Zeolith Y in einer Matrix umfaßt, welches umfaßt:

a) Zusatz von Zeolith ZSM-5 in Form von 25 Gew.-% Zeolith und 75 Gew.-% Bindemittel in einer Menge, die 2 bis 5 Gew.-% äquivalent ist, bezogen auf das Gewicht des Zeolith ZSM-5 und Bindemittel, und, bezogen auf das Gesamtgewicht des Gleichgewichtskatalysators, der in der katalytischen Wirbelschicht-Crackanlage zirkuliert, innerhalb eines Zeitraumes von 24—48 h, die ausreichend ist, um die Oktanzahl des Benzinproduktes des katalytischen Wirbelschichtcrackens um etwa 1,0 bis 1,5 Researchoktanzahlen zu erhöhen; und

b) anschließende Zugabe einer abnehmenden Menge des Katalysators ZSM-5 auf Tagebasis mindestens eine Woche lang, um die Erhöhung der Oktanzahl des Benzinproduktes des katalytische Wirbelschichtcrackens aufrechtzuerhalten.

8. Verfahren nach Anspruch 7, worin die Oktanerhöhung 1,5 beträgt und die Auffüllungsmenge von ZSM-5 pro Tag im wesentlichen gleich ist mit:

7

| Tag | Gew.-% ZSM-5 |
|---|---|
| 1 | 0,75 bis 0,9 |
| 2 | 0,192 bis 0,24 |
| 3 | 0,192 bis 0,24 |
| 4 | 0,14 bis 0,175 |
| 5 | 0,14 bis 0,175 |
| 6 | 0,14 bis 0,175 |
| 7—12 | 0,12 bis 0,15 |
| 13—18 | 0,108 bis 0,13 |
| 19—30 | 0,092 bis 0,115 |
| 31+ | 0,08 bis 0,095 |

9. Verfahren nach Anspruch 7, worin die Menge des Zeolith ZSM-5 in Form von 25 Gew.-% Zeolith und 75 Gew.-% Bindemittel mit 2—5 Gew.-% des Gleichgewichtskatalysator äquivalent ist.

10. Verfahren nach Anspruch 8, worin die Menge des Zeolith ZSM-5 in Form von 25 Gew.-% Zeolith und 75 Gew.-% Bindemittel mit 2—5 Gew.-% des Gleichgewichtskatalysators äquivalent ist.

**Revendications**

1. Une méthode d'addition d'un supplément de catalyseur de ZSM-5 au stock de catalyseur d'une unité de craquage catalytique en lit fluidisé, consistant:

a) à se donner une cible d'élévation d'indice d'octane souhaitée, l'élévation de l'indice d'octane étant au moins équivalente à une augmentation de 0,5 points d'indice d'octane recherche dans la fraction essence du courant de FCC obtenu;

b) à faire une première addition de supplément de ZSM-5 dans une période ne dépassant pas environ 24 heures pour atteindre la cible souhaitée d'élévation d'indice d'octane;

c) à ajouter, au cours de chaque période suivante de 24 à 48 heures, un supplément de catalyseur de ZSM-5 suffisant pour maintenir l'élévation de l'indice d'octane que l'on s'est fixée comme cible au niveau souhaité, et dans lequel la quantité totale de supplément de catalyseur de ZSM-5 ajoutée dans chaque période de 48 heures est inférieure à la quantité supplémentaire de ZSM-5 ajoutée pendant la première période d'addition de 24 heures.

2. Méthode selon la revendication 1, dans laquelle l'élévation de l'indice d'octane est comprise entre 0,5 et 3,0 points d'indice d'octane recherche.

3. Méthode selon la revendication 1, dans laquelle l'élévation de l'indice d'octane est comprise entre 1,0 et 1,5 points d'indice d'octane.

4. Une méthode d'addition de catalyseur de ZSM-5 à une unité FCC contenant un certain stock de catalyseur à l'équilibre comprenant les étapes suivantes:

a) on ajoute le catalyseur de ZSM-5 au stock de catalyseur à l'équilibre, le poids% de ZSM-5, sur la base de la ZSM-5 pure, ajouté au stock de catalyseur étant égal à 1 à 6% en poids du catalyseur à l'équilibre et étant suffisant pour augmenter l'indice d'octane recherche de l'essence FCC obtenue de 0,5 à 3,0 points d'indice d'octane, et l'effet d'amélioration de la ZSM-5 étant obtenu dans une période de 24 heures; et

b) on ajoute après cela, sur une base journalière pendant une période d'au moins une semaine, un supplément de catalyseur de ZSM-5 en réduisant progressivement les incréments de catalyseur à une quantité suffisante pour maintenir l'augmentation souhaitée d'indice d'octane du produit, une fraction d'essence FCC présentant un indice d'octane augmenté étant obtenue à titre de produit du procédé.

5. Méthode selon la revendication 4, dans laquelle l'élévation de l'indice d'octane est comprise entre 1,0 et 1,5.

6. Méthode selon la revendication 4, dans laquelle on ajoute de la ZSM-5 sur une base journalière pendant au moins 30 jours.

7. Une méthode d'incorporation de catalyseur de ZSM-5 dans une unité FCC contenant du catalyseur FCC à l'équilibre, ce catalyseur comprenant une zérolite Y à base de terres rares (REY) inclus dans une matrice, cette méthode comprenant les étapes suivantes:

a) on ajoute, dans une période de 24 à 48 heures, une zéolite ZSM-5 à 25% en poids de zéolite et à 75% en poids de liant, en quantité équivalente à 2 à 5% en poids par rapport au poids de la zéolite ZSM-5 et du liant et du poids total du catalyseur à l'équilibre circulant dans l'unité FCC, et suffisante pour augmenter l'indice d'octane de l'essence FCC obtenue d'environ 1,0 à 1,5 points d'indice d'octane recherche; et

b) on ajoute après cela, sur une base journalière pendant au moins une semaine, une quantité décroissante de catalyseur de ZSM-5 de façon à conserver l'augmentation d'indice d'octane de l'essence FCC obtenue.

8. Méthode selon la revendication 7, dans laquelle l'augmentation d'indice d'octane est égale à 1,5 et le taux de complément de ZSM-5 par jour est sensiblement égal à:

| Jour | % en poids de ZSM-5 |
|------|---------------------|
| 1 | 0,75 à 0,9 |
| 2 | 0,192 à 0,24 |
| 3 | 0,192 à 0,24 |
| 4 | 0,14 à 0,175 |
| 5 | 0,14 à 0,175 |
| 6 | 0,14 à 0,175 |
| 7—12 | 0,12 à 0,15 |
| 13—18 | 0,108 à 0,13 |
| 19—30 | 0,092 à 0,115 |
| 31+ | 0,08 à 0,095 |

9. La méthode selon la revendication 7, dans laquelle la quantité de zéolite ZSM-5 sous la forme de zéolite à 25% en poids et de liant à 75% en poids est équivalente à 2 à 5% en poids du catalyseur à l'équilibre.

10. La méthode selon la revendication 8, dans laquelle la quantité de zéolite ZSM-5 sous la forme de zéolite à 25% en poids et de liant à 75% en poids est équivalente à 2 à 5% en poids du catalyseur à l'équilibre.